# EUROPEAN PATENT APPLICATION

(11) **EP 2 133 801 A1**
(43) Date of publication of application: **16.12.2009**
(21) Application number: 09156741.2
(22) Date of filing: 30.03.2009
(51) Int. Cl.: G06F 13/42

(54) **Data alignment system and method for double data rate input data stream**

(30) Priority: 13.06.2008 US 139278
(71) Applicant: Honeywell International Inc., Morristown, NJ 07962 (US)
(72) Inventor: CALTAGIRONE, Joseph, Morristown, NJ 07962-2245 (US); PARKER, James Dewey, Morristown, NJ 07962-2245 (US)
(74) Representative: Buckley, Guy Julian

(57) **Abstract**

Methods and apparatus arc provided for a system for aligning data. The apparatus comprises a data processing component adapted to produce a plurality of processed data streams delayed by a successively increasing number of clock cycles, a plurality of sequence detection components coupled to the data processing component , each of the plurality of sequence detection components adapted to inspect its input data stream for a predetermined sequence of bits, and a data selecting component adapted to receive the plurality of processed data streams, to select one of the plurality of processed data streams in response to receiving an indicator from a corresponding sequence detection component.

## Description

### STATEMENT REGARDING FEDERALLY SPONSORED RESEARCH OR DEVELOPMENT

This invention was made with Government support under Subcontract TF0016 awarded by Lockheed Martin Space Systems Company. The Government has certain rights in this invention.

### TECHNICAL FIELD

The subject matter described herein generally relates to aligning streamed data, and more particularly relates to creating discrete data words from a multiplexed input stream with both data and alignment information.

### BACKGROUND

Streamed data can contain data bits, which form data words. Under certain circumstances, however, data bits corresponding to a particular clock signal can be shifted to a different clock signal, resulting in a mismatch with the data bits or data words. As one example, the data bits forming the boundary of a certain data word can be offset from an accompanying synchronization or clock signal, resulting in misplaced data bits for the boundaries of the certain data word.

Misalignment of the data bits into incorrect data words can cause corruption in the data. One source of misalignment can be a difference in physical length between a wire transmitting the data stream and a wire transmitting the synchronization information. Alternatively, constantly changing lengths in such wires can offset the data and result in misaligned data and synchronization information or signals. Accordingly, it can be difficult to re-sync the data to form it into data words with the correct beginning and ending data bits.

Additionally, serial data transmitted as a stream of data bits can be skewed in time as compared to data transmitted in parallel. To de-skew data, a window of valid data, known as the data eye, must be found, which can require many clock cycles, depending on the number of bits in serial data devoted to indicating the beginning of a sequence of data.

### BRIEF SUMMARY

An apparatus is provided for a system for aligning data. The system comprises a data processing component adapted to receive the data stream, and produce, from the data stream, a plurality of processed data streams delayed by a successively increasing amount of time, a plurality of sequence detection components coupled to the data processing component, each of the plurality of sequence detection components adapted to receive one of the processed data streams as its input data stream, to inspect its input data stream for a predetermined sequence of bits, and to transmit an indicator in response to detecting the predetermined sequence of bits, and a data selecting component coupled to the data processing component and to the plurality of sequence detection components, the data selecting component adapted to receive the plurality of processed data streams, to select one of the plurality of processed data streams in response to receiving an indicator from a corresponding sequence detection component, and to transmit the selected processed data stream.

A method is also provided for aligning data. The method comprises receiving a data stream, successively delaying the data stream to produce a plurality of processed data streams, and inspecting each of the processed data streams for a predetermined sequence of bits.

Another method is provided for aligning data. The method comprises separating a data stream into a plurality of successively-delayed processed data streams, providing the processed data streams to a data selecting component, providing each of the processed data streams to a respective one of a plurality of sequence detection components, inspecting each of the plurality of processed data streams with its respective sequence detection component to detect a predetermined sequence of bits, and transmitting an indicator from one of the sequence detection components in response to detecting the predetermined sequence of bits in one of the processed data streams.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DESCRIPTION OF THE DRAWINGS

At least one embodiment of the present invention will hereinafter be described in conjunction with the following drawing figures, wherein like numerals denote like elements, and

FIG. 1 is a schematic diagram of a data alignment system;

FIG. 2 is a timing diagram of an exemplary double data rate data stream including bit values;

FIG. 3 is a sequence diagram that illustrates the bit values of the double data rate data stream of FIG. 2;

FIG. 4 is a schematic representation of the demultiplexed bit values of the double data rate data stream of FIG. 3;

FIG. 5 is an illustration of an 8-bit data word;

FIG. 6 is a schematic diagram of another data alignment system;

FIG. 7 is an illustration of several sample data portions; and

FIG. 8 is a flow chart that illustrates an embodiment of a data aligning method.

### DESCRIPTION OF AN EXEMPLARY EMBODIMENT

The following detailed description is merely exemplary in nature and is not intended to limit the application and uses of the subject matter. Furthermore, there is no intention to be bound by any expressed or implied theory presented in the preceding technical field, background, brief summary or the following detailed description.

Techniques and technologies may be described herein in terms of functional and/or logical block components and various processing steps. It should be appreciated that such block components may be realized by any number of hardware, software, and/or firmware components configured to perform the specified functions. For example, an embodiment of a system or a component, such as a data recording component or sequence detection component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments may be practiced in conjunction with any number of data transmission protocols and that the system described herein is merely one suitable example.

For the sake of brevity, certain conventional techniques related to signal processing, data transmission, signaling, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the subject matter.

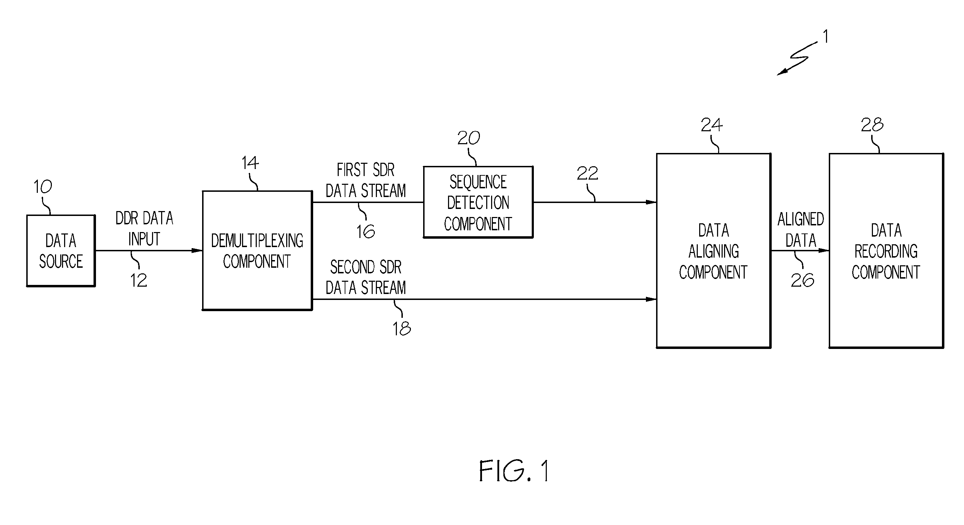

"Connected/Coupled" - The following description refers to elements or nodes or features being "connected" or "coupled" together. As used herein, unless expressly stated otherwise, "connected" means that one element/node/feature is directly joined to (or directly communicates with) another element/node/feature, and not necessarily mechanically. Likewise, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one example arrangement of elements, additional intervening elements, devices, features, or components may be present in an embodiment of the depicted subject matter.

FIG. 1 illustrates an embodiment of a data alignment system 1, which generally includes, without limitation: a data source 10, a demultiplexing component 14, a sequence detection component 20, a data aligning component 24, and a data recording component 28. These elements are coupled together in an appropriate manner to accommodate the transfer of signals and data as needed to support the operation of system 1 as described herein. The system 1 can receive data from the data source 10. The data source 10 can be any component, system, or transmitting element adapted to transmit data using a double data rate (DDR) data stream. Accordingly, a DDR data input 12 data stream can be provided to the demultiplexing component 14. The demultiplexing component 14 can split, bifurcate, or otherwise process the DDR data input 12 into two single data rate (SDR) data streams 16, 18. The first and second SDR data streams 16, 18 together can contain all of the data conveyed in the DDR data input 12, in a de-coupled format, as later explained.

The first SDR data stream 16 can be provided to the sequence detection component 20, which is adapted to receive the SDR data steam 16 and inspect it for the presence of various predetermined bit sequences. The sequence detection component 20 can be coupled to the data aligning component 24 and can provide synchronization information 22 to the data aligning component 24. The data aligning component 24 can also receive the second SDR data stream 18. The data aligning component 24 can use the synchronization information 22 to create discrete data segments, or data words, from the second SDR data stream 18, corresponding to sequences provided in the synchronization information 22. The data aligning component can then provide aligned data 26, comprising data words from the second SDR data stream 18, to the data recording component 28 for recordation and/or any appropriate use.

The data source 10 can be any source capable of providing a DDR data stream. Typically, such sources can include sensors, such as accelerometers, temperature sensors, video sensors, and the like, though other sources are contemplated. As one non-limiting example of another data source, a communication device may be transmitting DDR data and act as a data source.

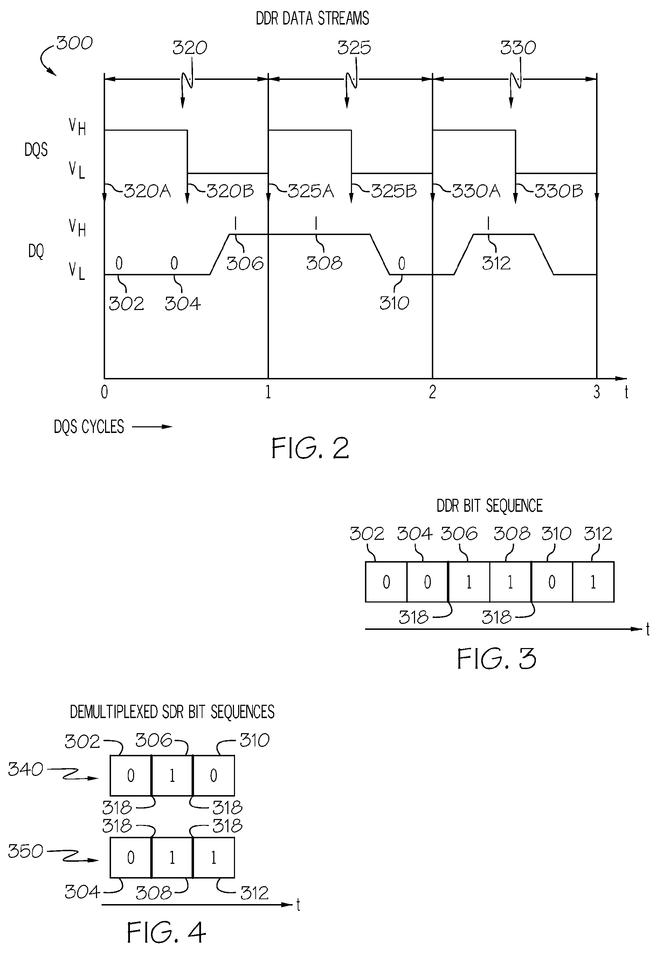

DDR data streams can contain bits transmitted in accordance with any suitable DDR specification or standard. With reference to FIG. 2, a DDR data stream 300 is shown. The DDR data stream 300 can include any or all of the signals described below, as well as additional signals. The term "Double Data Rate" refers to the speed at which bits of information are transmitted relative to the "strobe" signal, denoted as the "DQS" signal. A data signal, denoted as the "DQ" signal, is also transmitted. Each signal is shown as changing between two voltages, a respective low voltage "V_{L}" and a respective high voltage "V_{H}" (the signals may, but need not, have the same high voltage levels and the same low voltage levels).

Three successive DQS cycles 320, 325, 330 are shown. The x-axis can represent advancing time, as indicated by the *t* and associated directional arrow. The integers listed along the x-axis can represent the periods of the first, second, and third successive DQS cycles 320, 325, 330. For each regular DQS cycle, the DQ signal can be evaluated at the transition of the DQS cycle from a low to high voltage - known as the rising edge or first portion of the signal - and from a high to a low voltage - known as the falling edge or the second portion of the signal. The DQ signal can be examined for a value either at its V_{L} or its V_{H} voltages. A DQ signal with a V_{L} value can be recorded as a null or "0" bit, while a DQ signal at the V_{H} value can be recorded as a non-null or "1" bit. Thus, in FIG. 2, a 0 bit 302 followed by a second 0 bit 304 are associated with the first DQS cycle 320. The first 0 bit 302 is associated with the rising edge 320A of the first DQS cycle 320. The second 0 bit 304 is associated with the falling edge 320B of the first DQS cycle 320. Similarly, two 1 bits 306, 308 are associated with the second DQS cycle 325. The DQ signal can be examined at the rising 325A and falling 325B edges of the second DQS cycle 325 to determine the values of the two bits 306, 308. A 0 bit 310 and 1 bit 312 are associated with the third DQS cycle 330, along the first portion or rising edge 330A and the second portion or falling edge 330B, respectively. The particular bit values shown in FIG. 2 are merely used for purposes of this description. In practice, any suitable bit pattern can be conveyed in the DQ signal. The first bit 302 can be considered associated with the first portion of the first DQS cycle 320, as the DQ signal is examined during the rising edge 320A of the first DQS cycle 320. Similarly, the second bit 304 can be considered associated with the second portion of the first DQS cycle 320, as the DQ signal is examined during the falling edge 320B of the cycle.

In a Single Data Rate (SDR) signal, the DQ signal cycles at the same frequency as the DQS signal, resulting in only one bit per DQS cycle, as opposed to two bits per DQS cycle. Accordingly, a DDR data stream can transmit twice as many bits in the same number of DQS cycles as a SDR data stream.

The data source 10 can be configured to provide DDR data comprising two types of input information, data bits and meta-data bits, such as header or synchronization bits. The DDR data stream can comprise a constant stream of bits during both the first and second halves of the DQS cycle, with a measurement point in the DQ signal occurring twice during the cycle, allowing for the conveyance of one bit of information per "half' or portion of the DQS cycle.

With reference to FIG. 3, the values of the DQ signal of the data stream 300 of FIG. 2 are depicted in a sequence of bits. The bits from the DQ signal are listed in sequence, with separators 318 indicating the change of cycle in the DQS signal. Accordingly, the 0 bit 302 associated with the first portion of the first DQS cycle 320 appears as the first bit. Similarly, the 0 bit 304 associated with the second half of the first DQS cycle 320 appears as the second bit. The remaining bits 306, 308, 310, 312 appear in sequence. Additional bits would continue in sequence for additional DQS cycles beyond the third illustrated 330.

Returning to FIG. 1, the demultiplexing component 14 can be used to bifurcate, separate, or deinterleave the incoming DDR data stream 12 into two SDR data streams 16, 18. The demultiplexing component 14 can be adapted to adjust the DDR data steam using a plurality of methods. In some embodiments, a DDR data input is turned into a sequential SDR data stream, where bit information is transmitted on only one portion of a DQS signal. Because DDR data can be conveyed with both the first and second halves of a DQS clock cycle, such a resulting SDR data stream would have to operate at twice the DQS frequency in order to transmit the same amount of data in the same amount of time as the DDR data stream. Preferably, the demultiplexing component 14 can bifurcate the DDR data stream 12 into two parallel SDR data streams.

Selection of bits for generation of the SDR data streams 16, 18 can occur in any suitable manner. In some embodiments, the first and second SDR data streams can convey a number of sequential bits from the DDR data stream in an alternating manner, based on the same DQS cycle. As an example, with reference to FIG. 3, the first SDR data stream could sequentially comprise the bits 302, 304 associated with the first DQS cycle, while the second SDR data stream could sequentially comprise the bits 306, 308 associated with the second DQS cycle. Thus, for four input DDR bits, two output bits in each of two streams would be created over two DQS intervals, thereby preserving the data rate of the DDR input.

As described, any of several methods of bifurcating the DDR data stream can be used. FIG. 4 illustrates non-limiting exemplary output of a demultiplexed sequence 300. A first SDR data stream 340 contains a sequence of bits composed of the first of the two bits of information from each DQS cycle. Thus, the bit information from the first half of the first DQS cycle 320, a 0 bit 302, comprises the bit information for the first bit in the first SDR data stream 340. Similarly, the bit obtained from the first half of the second DQS cycle 325, a 1 bit 306, comprises the bit information for the second bit in the first SDR data stream 340, and can continue for as many bits as are present in the DDR data stream. Conversely, the bit information from the second half of the first DQS cycle signal 320, a 0 bit 304, comprises the first bit in the second SDR data stream 350, and so on.

Accordingly, the DDR data stream can be demultiplexed by creating two SDR data streams wherein the bit information for each SDR data stream is obtained from alternating halves of the DQS cycle of the DDR data stream. Thus, a first SDR data stream can comprise the bits associated with the first half of all DDR DQS cycles and a second SDR data stream can comprise the bits associated with the second half of all DDR DQS cycles. The selection of bits from certain halves of the DQS cycle and association with certain SDR data streams can be selected by the demultiplexing unit or a user, and neither necessarily corresponds to a particular data stream or half of a DQS cycle.

Thus, with reference back to FIG. 1, the first SDR data stream 16 can comprise only the bits from the first or second half of a DQS cycle. The other half of each DQS cycle can be provided to the second SDR data stream 18, thereby producing two SDR data streams at the same DQS frequency as the DDR data input 12. In the illustrated example, the bits from second half of each DQS cycle comprise the first SDR data stream 16, while bits from the first half of each DQS cycle comprise the second SDR data stream 18. The DQS halves and corresponding SDR data streams can be different in different embodiments.

Thus, the DDR data input 12 has been demultiplexed, split, or bifurcated by the demultiplexing component 14 into two SDR data streams 16, 18. The first SDR data stream 16 can be provided to the sequence detection component 20. The sequence detection component 20 can be adapted to observe the bits in one of the SDR data streams 16, 18. In other embodiments, the sequence detection component 20 can be coupled to the second SDR data stream 16, or be adapted to receive bits from a different half of the DDR data stream DQS cycle, or the sequence detection component 20 can be coupled to both SDR data streams 16, 18, and adapted to observe the bits from one or both. In certain embodiments, the DDR data stream can be demultiplexed into more than two SDR data streams. Such embodiments could have different rates or frequencies of clock signals to maintain integrity of the data streams.

Because the data stream comprises a continuous sequence of bits, forming discrete data segments, called data words, is advantageous before attempting to perform data manipulation. To designate the beginning and/or ending of data words, sequence information, preferably in a repeated pattern, can be transmitted by the data source 10 with a specified half of the DQS cycle. In some embodiments, the sequence information can be considered meta-data or synchronization bits, informing components as to the designated beginning or ending of data words, inherently conveying the size of each data word as well. Thus, in some embodiments, the bits associated with the first half of the DDR DQS cycle can provide, as one example, sensory data from the data source, and the bits associated with the second half of the DDR DQS cycle can contain bits which, in appropriate patterns, can indicate the beginning and/or end of words consisting of the sensory data bits. Other embodiments can have different configurations of data and/or meta-data as advantageous for the particular embodiment.

In the illustrated embodiment, the sequence detection component 20 is adapted to receive the first SDR data stream 16 and determine or detect a predetermined bit pattern therein. The particular bit pattern and/or length of the bit pattern can vary from system to system and different bit patterns can be utilized to signify different events, conditions, information, formations of data, and the like. In one non-limiting example, the sequence detection component 20 can determine when a sequence of bits in the first SDR data stream 16 can indicate the beginning or end of a data word in the second SDR data stream 18. In some embodiments, a bit beginning or ending a data word in the second SDR data stream 18 can be associated with the same DQS cycle

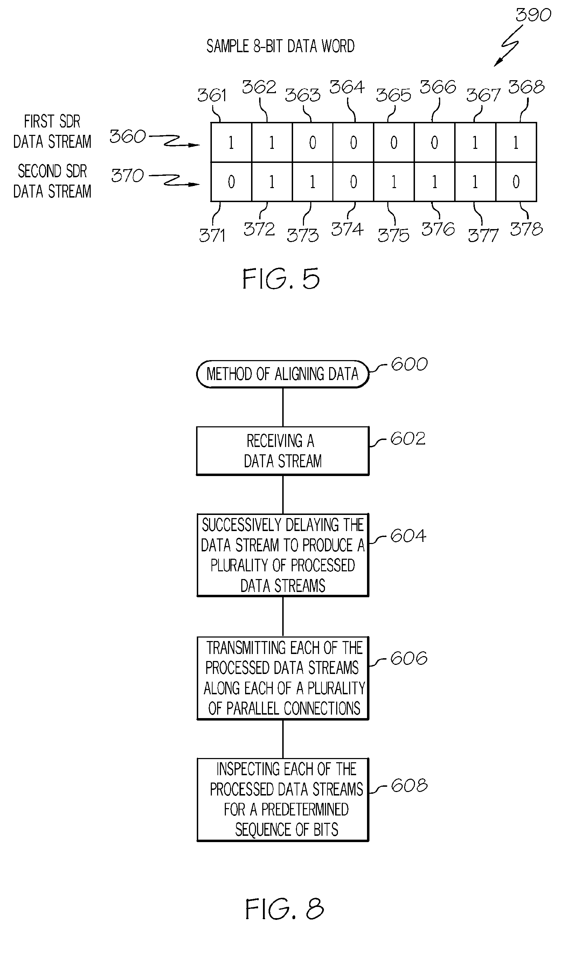

With reference to FIG. 5, a sample 8-bit data word 390 is shown. In the sample data word 390, a first SDR data stream 360 contains a sequence of bits 361, 362, 363, 364, 365, 366, 367, 368 which the data source generated and transmitted as a stream. In some embodiments, this bit sequence can originate from the bits associated with the first or second half of a DQS cycle of a DDR data stream. The bits from the first SDR data stream 360 can convey a pattern indicating the beginning or end of a data word in the second SDR data stream 370. With reference to the embodiment illustrated in FIG 1, the bits conveying a pattern indicating the beginning or end of a data word in a SDR data stream would correspond to the first SDR data stream 16 and could convey meta-data or synchronization information.

The second SDR data stream 370 can comprise a series of bits associated with the opposite half of a DQS cycle of the DDR data stream with which bits from the first SDR data stream 360 were associated. As one non-limiting example, if the first bit 361 in the first SDR data stream 360 is associated with the first half of the first DQS cycle, the first bit 371 of the second SDR data stream 370 can be associated with the second half of the first DQS cycle. Thus, as one non-limiting example, in the embodiment illustrated in FIG. 1, the second SDR data stream 370 would correspond to the second SDR data stream 18, comprising the data from data source 10. As shown in FIG. 5, the bits of the second SDR data stream 370 can have the sequence 01101110, though many other sequences are also possible.

With continued reference to FIG. 5, a pattern of two adjacent 1 bits 361, 362 in the first SDR data stream 360 can indicate the beginning of a data word in the second SDR data steam 370, where the first 1 bit 361 indicates the first bit 371 in the data word in the second SDR data stream 370. Similarly, a sequence of two adjacent 1 bits can indicate the end of the data word, wherein the second 1 bit 368 indicates the final bit 378 in the data word in the second SDR data stream 370. Although the 11 pattern has been used for exemplary purposes, any useful, repeatable pattern can be used. Some non-limiting examples can include only a single 1 bit on the first SDR data stream indicating the first bit in a data word in the second SDR data stream, a sequence of 101 in the first SDR data stream preceding the first bit in a data word in the second SDR data stream, a continuous series of ls in the first SDR data stream, with only a single 0 or null bit indicating the beginning of a data word in the second SDR data stream, and any other suitably identifying pattern. Again, these bit patterns are generated by the data source 10, and are known *a priori* by the sequence detection component 20. Such predetermined bit patterns or sequences or flag/header sequences can be inserted into data streams at the beginning and/or end of data taps for the purpose of de-skewing data as well.

Additionally, because the beginning and/or end of data words in a given SDR data stream can be signaled on a separate SDR data stream, the size of the data words in the data stream comprising sensory or other useful data can vary. One non-limiting example can include a set of sensory data corresponding to 8-bit data words, wherein the data word size is changed to 16 6 bits. The accompanying sequence pattern on a separate SDR data stream can indicate, by use of an appropriate pattern, the beginning and end of words has been altered to include 16 bits instead of 8. Because the separate SDR data stream is continuous and corresponds to the data in the given SDR data stream, the data word size can be constant or varied, and even change between successive data words, where the appropriate pattern or sequence can indicate the beginning and/or ending bits, allowing a component to align the data into data words properly.

Preferably, the meta-data bits indicating the beginning or end of data words in the given SDR data stream comprising data bits can be buffered or stored to synchronize the beginning and end of data words in a component. Preferably, the data bits from the given SDR data stream are additionally so buffered or stored. An exemplary embodiment is described with reference to FIG. 1, wherein the sequence detection component 20 determines the boundaries of data words and conveys such locations to the data aligning component 24 in the form of synchronization information 22. The data aligning component 24 can store a variable number of bits conveyed in the second SDR data stream 18 for alignment into data words in response to the synchronization information 22. In one non-limiting example, if the sequences from FIG. 5 were used in the system of FIG. 1, the data aligning component 24 would be informed of the start of a data word upon detection of the first 11 bits 361, 362 from the first SDR data stream 16, 360, but would be uninformed as to the total number of bits in the data word because the data word-ending bits 367, 368 had not yet been detected by the sequence detection component 20. Accordingly, the data aligning component 24 can be configured to record the sequence from the second SDR data stream 18, 370 until informed as to the boundary for termination of the data word. After determining the bits both starting and ending the data word, the data aligning component 24 can form the data word, and, in some embodiments, flush the buffer in which the data bits were held to begin storage of data bits for the following data word.

With reference back to FIG. 1, in some embodiments, where the demultiplexing component 14 creates SDR data streams using other methods, such as by alternating clock signals, the pattern indicating the beginning or ending of a data word can be present in the DDR data stream in a different manner. As an example, the pattern can be detected on alternating clock signals, rather than on alternating edges of a clock signal.

The sequence detection component 20 can be adapted to receive the first SDR data stream 16, and determine the size of data words in the corresponding second SDR data stream 18. The sequence detection component 20 can determine the size and position of data words in the second SDR data stream 18 by checking the first SDR data stream 16 for a predetermined pattern or sequence of bits. The sequence detection component 20 can then create synchronization information 22 which indicates which bits in the second SDR data stream 18 form the beginning and/or end of data words.

The synchronization information 22 can then be provided to the data aligning component 24. Synchronization information 22 can comprise information which indicates which bits of the second SDR data stream 18 are the first or last bits in a data word of variable size. Thus, the synchronization information 22 can convey any of several pieces of information useful to aligning streamed data into data words, such as the position in the stream of the first bit in a data word, the position of the last bit in a data word, the total number of bits in a data word, and any combination thereof, as well as any other useful information produced by the sequence detection component 20. Additionally, if the first and second SDR data streams 16, 18 become offset in time due to computation requirements of the sequence detection component 20, or for other processing or data transmission reasons, one or more delay elements or steps or components can be present in the system or in a component, such as the data aligning component 24, to maintain correct synchronization of the SDR data streams 16, 18.

The data aligning component 24 can receive both the synchronization information 22 and the second SDR data stream 18. With both, the data aligning component 24 can then create data words from the second SDR data stream 18. Such data words, of constant or varying size, can comprise aligned data 26. The aligned data 26 can be provided to a data recording component 28, such as RAM or a hard disk for recordation and/or further processing.

In certain embodiments, as described, the sequence detection component 20 can be configured to detect any number of useful patterns indicating the boundaries of data words or taps. Thus, although one pattern is used for descriptive purposes, others are contemplated. Preferably, such patterns have a unique repeating sequence which does not occur over shorter intervals of bits than complete data words.

In some embodiments, the sequence detection component 20, data aligning component 24, and data recording component 28 can be a single component. In other embodiments, other combinations, such as a combined data aligning and data recording component are also possible. In some embodiments, more components can be integrated, such as the demultiplexing component and the sequence detection component. Thus, although illustrated as separate components, the elements of FIG. 1 can be integrated and/or combined as advantageous for practice of the system, such as comprising some portions of an integrated circuit.

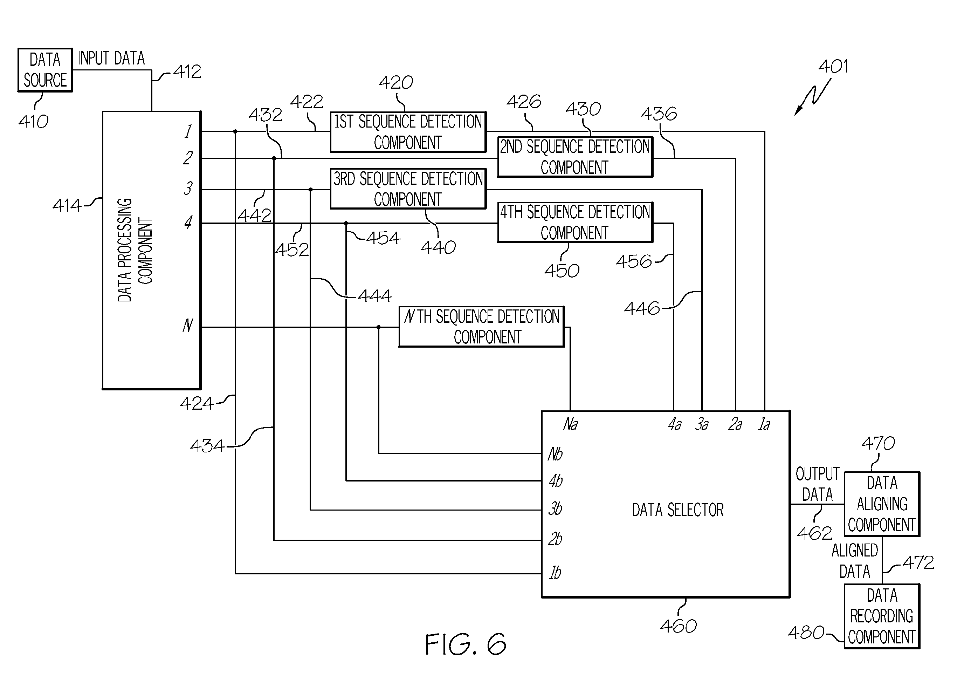

Under certain circumstances, data can become skewed relative to the time signal with which it is associated. This occurs when variations in the line of transmission, owing to length, abnormalities, or transmitter processing speed, for example, alter the rates of transmission of serial data through the lines. With reference to FIG. 6, a data alignment system 401 comprising a data source 410 can be considered a source of such a serial data transmission. In the illustrated embodiment, the data source 410 represents a transmitter of the input data 412. Accordingly, the input data 412 can, under certain circumstances, be considered skewed data.

To de-skew the data, a group of bits known as a "data eye" can be located. The data eye is a group of bits furthest from the boundaries of the sequence of bits of interest, known as a tap. Thus, for each tap, a bit halfway (or approximately halfway) between the beginning and end of the data eye is the center. As part of the de-skewing process, locating the data eye can be accomplished by sequencing the tap and determining its center. Accordingly, designating the beginning or ending of taps can be useful for locating the data eye.

As shown in FIG. 6, a plurality of sequence detection components 420, 430, 440, 450 can be used in parallel to perform data de-skew. Unless otherwise specified, components with the same name as prior-described components are similar in form and function.

A data source 410 can provide input data 412 to a data processing component 414. The input data 412 can be DDR or SDR data, as appropriate to the embodiment. The input data 412 preferably comprises a data stream of serial data with a predetermined bit sequence separating data segments in the data stream. The predetermined bit pattern can be as previously described or can comprise a different, predetermined sequence of bits.

A data processing component 414 can receive and process the input data 412 in an appropriate manner. The data processing component 414 can be adapted or configured to supply a plurality of parallel output lines or nodes, creating output data streams 422, 432, 442, 452. Each output data stream 422, 432, 442, 452 comprises at least some of the data from the input data 412. As shown, although four parallel output data streams and sequence detectors are specifically shown, up to *n* can be used in a similar configuration. *n* can be 2, 4, 8, 10, 12, 16, 32, 64, 128, or any other number suitable to the embodiment. Each output *1*, *2*, *3*, *4*,... *n* of the data processing component 414 is labeled. In some embodiments, the data processing component 414 has previously received and/or stored the data for de-skewing. In such embodiments, the data source 410 is disabled, bypassed, or is not implemented at all.

To assist in correctly framing the input data 412 into de-skewed data segments, such as data taps or data words, the predetermined bit sequence can be used as a header, preceding the data segment. In a stream of data, the predetermined bit sequence, or flag, will occur between data segments, repetitiously, in regular intervals. Data skewed in time to a clock cycle, however, may result in lost or additional bits in the data stream. Accordingly, where a series of 8-bit data taps comprises the data stream with the flag preceding each data tap, in some cases, 6, 7, 9, or 10 bits may occur between data taps. Differently-sized data taps can have differently-sized variations, or can also vary by 1 or 2 bits. Thus, when attempting to frame the serial data into data segments, the start of some data taps will be offset from a repeated 8-bit measure. By determining the location of the flag in the data stream, the beginning of a data segment can be measured, and examined for the correct number of bits before the beginning of the next flag.

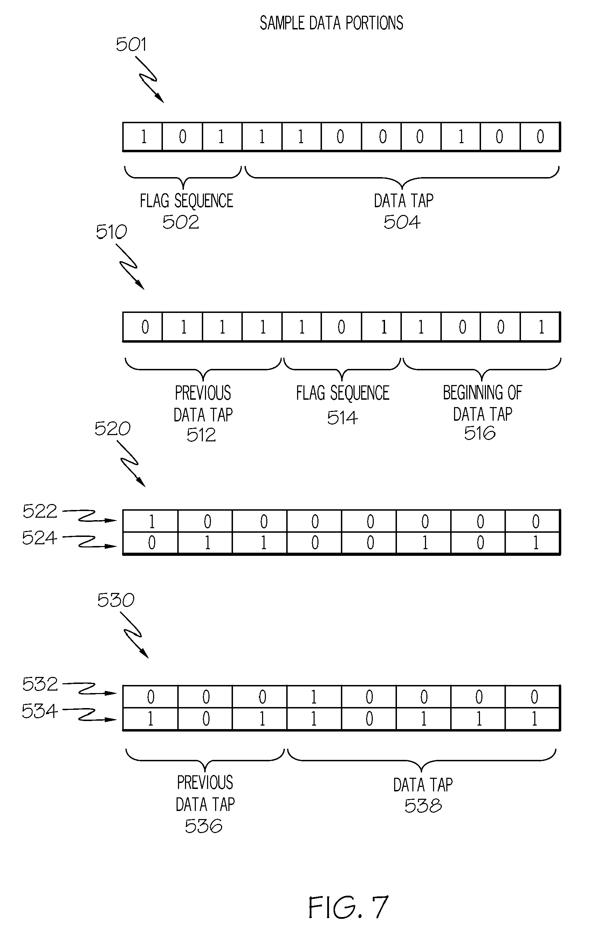

The data therefore can be skewed in time. This can occur because, for example, a bit of the data tap has been dropped or additional bits have been interposed between headers through transmission error. In such cases, the data is offset from the expected framing, but is still in the data stream. With reference to FIG. 7, a sample data portion 501 is shown. The data portion 501 comprises both the predetermined bit sequence, or flag sequence 502 and a data tap 504 comprising an 8-bit tap. Accordingly, a complete and properly-aligned data portion is present. When a sequence detection component receives the data portion 501, it will inspect the data portion 501 and detect the predetermined flag sequence 502. In response, the sequence detection component can transmit an indicator, such as a flag, bit, logical voltage high, or other indicator along a connection to the data selection component, or data selector 460 (FIG. 6).

With continued reference to FIG. 7, a sample portion 510 of a skewed data stream is shown. As can be seen, although the header or flag sequence 514 is present, it has been skewed in time from the beginning of the portion 510. Instead, four bits from the previous data tap 512 in the serial line occupy positions at the beginning of the skewed data portion 510. Correspondingly, only the first four bits of the data tap 516 following the flag sequence 514 are present in the skewed data portion 510. When the skewed data portion 510 is provided to a sequence detection component, the sequence detection component can be configured to transmit an indicator when it detects the flag sequence 514. The indicator allows the system to compensate for skewed data, as described below.

Finally, some data portions can be DDR data portions, such as the sample DDR data portion 520. In some embodiments, the sequence detection component can inspect the entire DDR data portion 520, attempting to locate a bit in the first or second SDR data portion 522, 524, similar to those described with reference to demultiplexing above. Thus, a flag bit can be a single bit in the first SDR portion 522, as shown, or can comprise a pattern or sequence. If necessary, a sequence detection component can comprise a demultiplexing element adapted to divide the DDR stream into first and second SDR data streams 522, 524, as shown in the sample DDR data portion 520. The sequence detection component 420, 430, 440, 450 (FIG. 6) can be adapted to transmit a pulse, bit, or other indicator in response to detecting the flag bit or bits or pattern or sequence in the data portion 520.

A skewed DDR data portion 530 can also occur. As shown in FIG. 7, the flag bit in the first SDR portion 532 can be offset from the beginning of the data portion 530. When inspecting the skewed DDR data portion 520, the sequence detection component 420, 430, 440, 450 can respond as described before.

One method of framing the data can be to examine all data frames for the beginning of a header, and subsequent data segment. To accomplish this, the input data 412 can be transmitted through the plurality of parallel output data streams 422, 432, 442, 452 in a sequentially delayed manner. Thus, the first output data stream 422 can comprise the input data stream 412. The second output data stream 432 can comprise the input data stream 412 delayed by some unit of time, such as a clock cycle or portion or multiple thereof. The third output data stream 442 can comprise the input data stream 412 delayed by two units or amounts of time, and so on. Preferably, there are at least as many parallel data streams as bits present in the combination of the data segment and the header. These sequentially-delayed data streams can be referred to as processed data streams.

A data selector 460 or data selecting component/device can be coupled to receive each of the output data streams 422, 432, 442, 452, as well as to the outputs of each of the sequence detection components 420, 430, 440, 450. Each sequence detection component 420, 430, 440, 450 can be adapted to transmit an indicator to the data selector 460 through a respective indicator connection 424, 434, 444, 454, as described above. In some embodiments, the sequence detection components 420, 430, 440, 450 can comprise and operate with demultiplexers, incorporating some or all of the functions of the elements of FIG. 1, to detect a predetermined bit pattern or flag bit occurring on either the rising or falling edge of the data stream. In other embodiments, the sequence detection components 420, 430, 440 can inspect the data stream each receives sequentially, without demultiplexing, and inspect either a SDR or DDR data stream, as appropriate to the embodiment.

The inputs of the data selector 460 receiving the indicators are numbered *1a*, *2a*, *3a*, *4a*, and so on to *Na.* Similarly, the inputs of the data selector 460 coupled to the parallel outputs are numbered *1b*, *2b*, *3b*, *4b*, and so on to *Nb.* The data selector 460 can be adapted to associate each input from an output data stream to an indicator connection input. Thus, the data selector 460 can associate the *1a* indicator input with the *1b* data stream. Accordingly, when a sequence detector 420, 430, 440, 450 transmits an indicator signaling detection of the predetermined bit sequence or header, the data selector 460 can select among the parallel input data stream connections 424, 434, 444, 454 to identify the input data stream in which the predetermined bit sequence was detected.

Once a data stream is selected, the data selector 460 can pass on the data contained within the selected data stream until the next predetermined bit sequence is detected. Preferably, once a first data stream is selected, the data selector 460 continues to pass on that data stream until skew is detected in the selected data stream. Such skew can be determined by the data selector 460 by examining the number of bits in a data tap, and comparing the result against the expected number of bits. For example, for an 8-bit data word, if the predetermined bit sequence has not been detected in the data stream after 9 or more bits, as signaled by an indicator from an associated sequence detector 420, 430, 440, 450, the data selector 460 can determine that the data in the selected stream has been skewed. A parallel stream, however, will contain the predetermined bit sequence occurring either one or two bits before or after the expected end. At least one of the sequence detectors 420, 430, 440, 450 can determine its occurrence and transmit an indicator conveying such. The data selector 460, therefore, can select a new stream of data to frame as properly aligned, and repeat this procedure until all data has been processed.

In some embodiments, the data selector 460 can provide output data 462 to a data aligning component 470, similar to those described above. Similarly, the data aligning component 470 can provide aligned data 472 to a data recording component 480 adapted to record the aligned data 472.

After the data selector 460 receives an indicator and selects the data stream associated with the indicating sequence detection component, the data aligning component 470 can receive the output data 462 and frame the output data 462 as a data word or data tap, removing the predetermined or flag sequence of bits, if desired. The data recording component 480 can then record the aligned data 472. By establishing the location of boundary bits, the data eye can be established and its center easily determined. Thus, the input data 412 can be de-skewed through the use of the data alignment system 401.

In some embodiments, the data aligning component 470 can be combined with the data selector 460. The data selector 460 can perform the tasks of the aligning component 470 and provide aligned data 472 directly to the data recording component 480. Similarly, in some embodiments, all three components can be combined to perform similar tasks as a single component.

FIG. 8 is a flow chart that illustrates an embodiment of a data processing method 600. The various tasks performed in connection with method 600 may be performed by software, hardware, firmware, or any combination thereof. For illustrative purposes, the following description of method 600 may refer to elements mentioned above in connection with FIGS. 1-7. In practice, portions of method 600 may be performed by different elements of the described system, e.g., a data stream demultiplexing component 14, a sequence detection component 20, or a data recording component 28. It should be appreciated that method 600 may include any number of additional or alternative tasks, the tasks shown in FIG. 8 need not be performed in the illustrated order, and method 600 may be incorporated into a more comprehensive procedure or process having additional functionality not described in detail herein.

Initially, a data aligning system adapted to de-skew serial data can receive 602 a data stream comprising skewed or potentially skewed serial data. In some cases, the input data can already be stored by the system. The system can then successively delay 604 the data stream to produce a plurality of processed data streams. Successive delay 604 produces a plurality of data streams offset from the clock cycle of the original data stream by a sequentially-increased number of delayed cycles. For example, a first processed data stream can contain the original input data stream, delayed by 0 clock cycles. A second processed data stream can contain the original input data stream delayed by one clock cycle, a third processed data stream can be the result of delay of two clock cycle, a fourth the result of delay by three clock cycles, and so on. As described above, preferably at least one processed data stream is produced for each clock cycle delay necessary to sequence an entire data tap, as well as any predetermined bit sequences, such as header or flag data bits.

Each of the plurality of processed data streams can be transmitted 606 along a plurality of parallel connections from the transmitting source. Subsequently, each of the plurality of processed data streams can be inspected 608 to for a predetermined pattern of bits positioned at the beginning of a data segment in the input data stream, such as a data tap. Thus, the plurality of processed data streams comprises a complete set of offsets for the original data stream. Accordingly, the predetermined bit sequence will be positioned at the start of one of the processed data streams, even in the event of any skew relative to the expected clock cycle in which the predetermined bit sequence was expected to begin.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing the exemplary embodiment or exemplary embodiments. It should be understood that various changes can be made in the function and arrangement of elements without departing from the scope of the invention as set forth in the appended claims and the legal equivalents thereof.

## Claims

1. A system (401) for aligning a data stream (412), the system (401) comprising:
a data processing component (414) adapted to receive the data stream (412), and produce, from the data stream (412), a plurality of processed data streams delayed by a successively increasing amount of time (422, 432, 442, 452);
a plurality of sequence detection components (420, 430, 440, 450) coupled to the data processing component (414), each of the plurality of sequence detection components (420, 430, 440, 450) adapted to receive one of the processed data streams (422, 432, 442, 452) as its input data stream, to inspect its input data stream for a predetermined sequence of bits, and to transmit an indicator in response to detecting the predetermined sequence of bits; and
a data selecting component (460) coupled to the data processing component (414) and to the plurality of sequence detection components (420, 430 440, 450), the data selecting component (460) adapted to receive the plurality of processed data streams (424, 434, 444, 454), to select one of the plurality of processed data streams (424, 434, 444, 454) in response to receiving an indicator from a corresponding sequence detection component (420, 430, 440, 450), and to transmit the selected processed data stream (462).

2. The data processing system of Claim 1, wherein the data stream (412) comprises a double data rate (DDR) data stream.

3. The data processing system (401) of Claim 2, wherein each of the plurality of sequence detection components comprises a demultiplexing element adapted to bifurcate the portion of the DDR data stream (412) into first and second single data rate (SDR) data streams.

4. The data processing system (401) of Claim 1, further comprising a data aligning component (470) coupled to the data selecting component (460) and adapted to receive the selected processed data stream (462).

5. The data processing system (401) of Claim 4, wherein the data aligning component (470) is further adapted to determine the center of the data eye of the selected processed data stream (462), thereby producing aligned data (472).

6. The data processing system (401) of Claim 5, wherein the data aligning component (470) is further adapted to transmit the aligned data (472), and the data processing system (401) further comprises a data recording component (480) adapted to receive the aligned data (472) and to record the aligned data (472).

7. A method of aligning data comprising:
receiving a data stream (412);
successively delaying the data stream (412) to produce a plurality of processed data streams (422, 432, 442, 452); and
inspecting each of the processed data (422, 432, 442, 452) streams for a predetermined sequence of bits.

8. The method of aligning data of Claim 7, further comprising receiving each of the plurality of processed data streams (422, 432, 442, 452) with a data selecting component (460) and associating each of the plurality of processed data streams (422, 432, 442, 452) with one of the plurality of sequence detection components (420, 430, 440, 450).

9. The method of aligning data of Claim 8, further comprising transmitting an indicator from one of the plurality of sequence detection components (420, 430, 440, 450) in response to detecting the predetermined sequence of bits and selecting the processed data stream (424, 434, 444, 454) associated with the transmitting sequence detection component in response to receiving the indicator.

10. A method of aligning data comprising:
separating a data stream (412) into a plurality of successively-delayed processed data streams (422, 424, 432, 434, 442, 444, 452, 454);
providing the processed data streams (424, 434, 444, 454) to a data selecting component (460);
providing each of the processed data streams (422, 432, 442, 452) to a respective one of a plurality of sequence detection components (420, 430, 440, 450);
inspecting each of the plurality of processed data streams (422, 432, 442, 452) with its respective sequence detection component (420, 430, 440, 450) to detect a predetermined sequence of bits; and
transmitting an indicator from one of the sequence detection components (420, 430, 440, 450) in response to detecting the predetermined sequence of bits in one of the processed data streams (422, 432, 442, 452).
